# EUROPEAN PATENT SPECIFICATION

(11) **EP 2 949 509 B1**
(45) Date of publication and mention of the grant of the patent: **04.01.2017**
(21) Application number: 14195028.7
(22) Date of filing: 26.11.2014
(51) Int. Cl.: B60Q 1/56

(54) **Saddle-straddling type motor vehicle**
Grätschsitzkraftfahrzeug
Véhicule à moteur de type selle à enfourcher

(30) Priority: 30.05.2014 JP 2014112932
(43) Date of publication of application: 02.12.2015
(73) Proprietor: Yamaha Hatsudoki Kabushiki Kaisha, Shizuoka-ken Shizuoka 438-8501 (JP)
(72) Inventor: Hashimoto, Naochika, Iwata-shi, Shizuoka-ken 438-8501 (JP)
(74) Representative: Zimmermann, Tankred Klaus

(56) References cited:
- EP-A2- 2 088 031
- CN-A- 101 670 807
- DE-B- 1 030 702
- JP-A- 2005 028 933
- US-A- 3 828 178

## Description

### BACKGROUND OF THE INVENTION

### Field of the Invention

The present invention relates to a saddle-straddling type motor vehicle.

### Description of Related Art

A license lamp unit that irradiates towards a number plate with light is provided at a rear portion of a saddle-straddling type motor vehicle such as a motorcycle. Further, a cover is provided to cover at least a part of the license lamp unit (see JP 2009-12642 A, or US 3 828 178 A, for example).

### BRIEF SUMMARY OF THE INVENTION

An object of the present invention is to provide a saddle-straddling type motor vehicle in which a size of a cover of a license lamp unit can be reduced.

This object is achieved by a saddle-straddling type motor vehicle according to claim 1.

The present invention is based on the findings that in prior art approaches a reduction in the size of the cover of the license lamp unit is not possible. The license lamp unit and the cover are individually respectively mounted to rear portions of a vehicle in order to ensure assembly performance. In this case, reduction in the size of the cover is prevented.
(1) According to one aspect of the present invention, a saddle-straddling type motor vehicle includes a body frame, a mud receiving member mounted to a rear portion of the body frame, a license lamp unit mounted to the mud receiving member and has a light emitting surface that emits light, and a cover mounted to the mud receiving member to cover at least a part of the license lamp unit except for the light emitting surface, wherein the license lamp unit includes a casing provided to open in a downward direction, a transmission portion that is provided to close an opening of the casing, transmits light and has the light emitting surface, a circuit board arranged in the casing and has a mount surface facing the transmission portion, light emitting devices mounted to the mount surface of the circuit board, and projections that are integrally formed with the casing and for fixing the circuit board in the casing, and a liquid-tight storage space in which the circuit board is stored is formed by the casing and the transmission portion, and the license lamp unit and the cover are mounted to the mud receiving member by a common mount member.

In this saddle-straddling type motor vehicle, the license lamp unit is mounted to the mud receiving member mounted to the rear portion of the body frame. Further, the cover is mounted to the mud receiving member to cover at least the part of the license lamp unit except for the light emitting surface. The liquid-tight space is formed by the casing and the transmission portion of the license lamp unit, and the circuit board is stored in the storage space. The circuit board is fixed by the projections provided at the casing. The light emitting devices are mounted to the mount surface of the circuit board facing the transmission portion. The light emitted by the light emitting devices is emitted from the light emitting surface through the transmission portion, and the number plate is irradiated.

In this case, because the license lamp unit is hidden by the cover, only the design of the cover needs to be changed when the design of the vehicle is changed, and it is not necessary to change the design of the license lamp unit. Thus, flexibility of the license lamp unit is enhanced.

Further, because the casing is not visible from the surroundings, restriction on appearance of the casing is reduced. Therefore, even when sink marks occur at the casing due to mold shrinkage, because the sink marks are hidden by the cover, the occurrence of sink marks is free from the problem. Thus, the casing having projections at inner portions can be formed by integral molding. In this case, it is not necessary to separately use a member for fixing the circuit board in the casing. Therefore, the size and the thickness of the license lamp unit can be reduced.

Further, the license lamp unit and the cover are mounted to the mud receiving member by the common mount member. Thus, it is not necessary to ensure a mount position to the mud receiving member at the cover separately from a mount position of the license lamp unit. Further, it is not necessary to ensure a mount position of the cover at the mud receiving member separately from the mount position of the license lamp unit. Therefore, the size of the cover and the mud receiving member can be reduced. Further, the number of components can be reduced.
(2) A first hole may be provided at the mud receiving member, a second hole may be provided at the casing of the license lamp unit and a third hole may be provided at the cover, the common mount member may include a bolt and a nut, and the license lamp unit and the cover may be positioned with respect to the mud receiving member such that the first, second and third holes overlap with one another, and the license lamp unit and the cover may be fixed to the mud receiving member by the bolt and the nut with the bolt being inserted into the first, second and third holes.

In this case, a license lamp unit and the cover can be fixed to the mud receiving member with simple configuration while reduction in the size of the cover is realized.
(3) The cover may be made of a same material as the mud receiving member. In this case, the texture of the cover is equal or close to the texture of the mud receiving member. On the other hand, the license lamp unit is hidden by the cover. Thus, restriction on the material of the license lamp unit is not generated, and even when the license lamp unit and the cover are mounted to the mud receiving member, strange feeling in appearance is not generated. Further, the strength of the cover can be made equal to the strength of the mud receiving member.
(4) A part of the casing may be made of a moisture-permeable water-proof material. In this case, vapor in the storage space of the casing is released to the outside of the casing through a portion of the casing made of the moisture-permeable water-proof material while moisture such as rain water is prevented from entering the casing from the outside. Therefore, an occurrence of condensation in the casing is prevented. Thus, an adherence of the liquid that has entered from the outside or the liquid generated due to the condensation to the circuit board or an electrical system such as the light emitting devices is prevented. Therefore, an occurrence of abnormality of the electrical system is prevented. Further, reduction in transmissivity of the transmission portion due to an adherence of the liquid to the transmission portion is prevented, so that weakening of the light emitted from the light emitting surface of the transmission portion is prevented.

Further, because the casing is hidden by the cover, even when the moisture-permeable water-proof material is provided at any position of the casing, the moisture-permeable water-proof material is not visible from the surroundings. Thus, there will be no restriction on the position of the moisture-permeable water-proof material due to the reason of appearance. Therefore, the size of the casing can be reduced while function of the moisture-permeable water-proof material is ensured.

### BRIEF DESCRIPTION OF THE SEVERAL VIEWS OF THE DRAWING

Fig. 1 is a side view showing a motorcycle according to one embodiment of the present invention;
Fig. 2 is a longitudinal cross sectional view of a lamp assembly;
Fig. 3 is a transverse cross sectional view of the lamp assembly; and
Figs. 4(a) and 4(b) are diagrams for explaining protrusions.

### DESCRIPTION OF THE PREFERRED EMBODIMENTS

A motorcycle will be described below as one example of a saddle-straddling type motor vehicle according to embodiments of the present invention with reference to drawings.

### (1) Configuration of Motorcycle

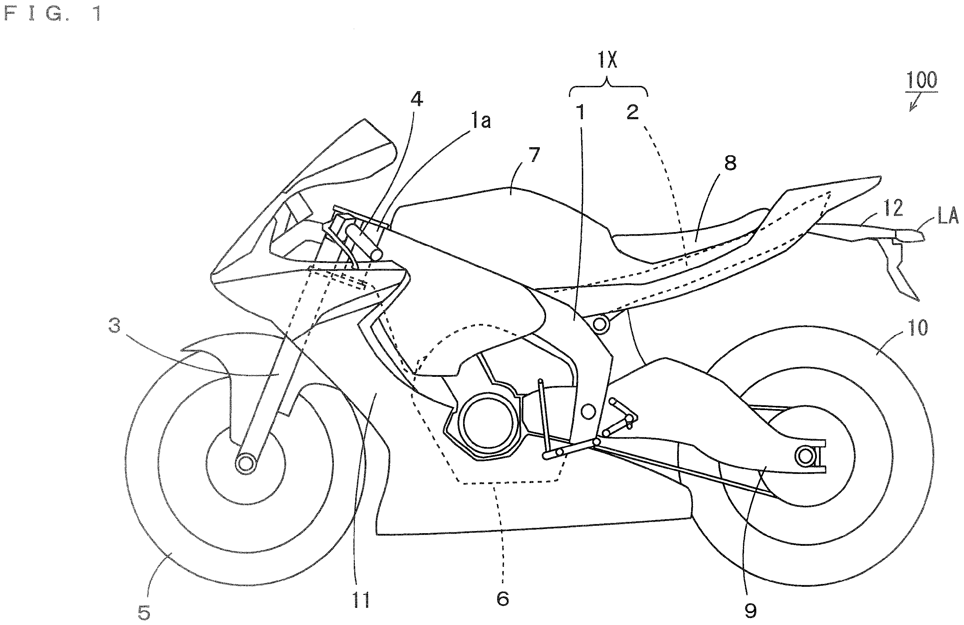

Fig. 1 is a side view showing the motorcycle according to one embodiment of the present invention. As shown in Fig. 1, the motorcycle 100 includes a body frame 1X. The body frame 1X includes a main-frame 1 and a sub-frame 2. The sub-frame 2 is provided to extend in a rearward direction from the main-frame 1.

A head pipe 1 a is provided at the front end of the main frame 1. A front fork 3 is mounted to the head pipe 1 a to be swingable to the right and the left. A handle 4 is provided at the upper end of the front fork 3, and a front wheel 5 is rotatably supported at the lower end of the front fork 3. A body cover 11 is provided to cover a part of each of the main-frame 1, the sub-frame 2 and the front fork 3.

An engine 6 is provided at a lower portion of the main frame 1. A rear arm 9 is provided behind the engine 6, and a rear wheel 10 is rotatably supported at the rear end of the rear arm 9. A fuel tank 7 is provided above the engine 6. A main seat 8 on which a driver is seated is held behind the fuel tank 7 by the sub-frame 2. A mud guard 12 is provided to extend in an obliquely downward rearward direction from the rear end of the sub-frame 2. A lamp assembly LA is mounted to the mud guard 12. A number plate (not shown) is mounted to a portion of the mud guard 12 below the lamp assembly LA. As described below, the lamp assembly LA includes a license lamp unit by which the number plate is irradiated with light.

### (2) Lamp Assembly

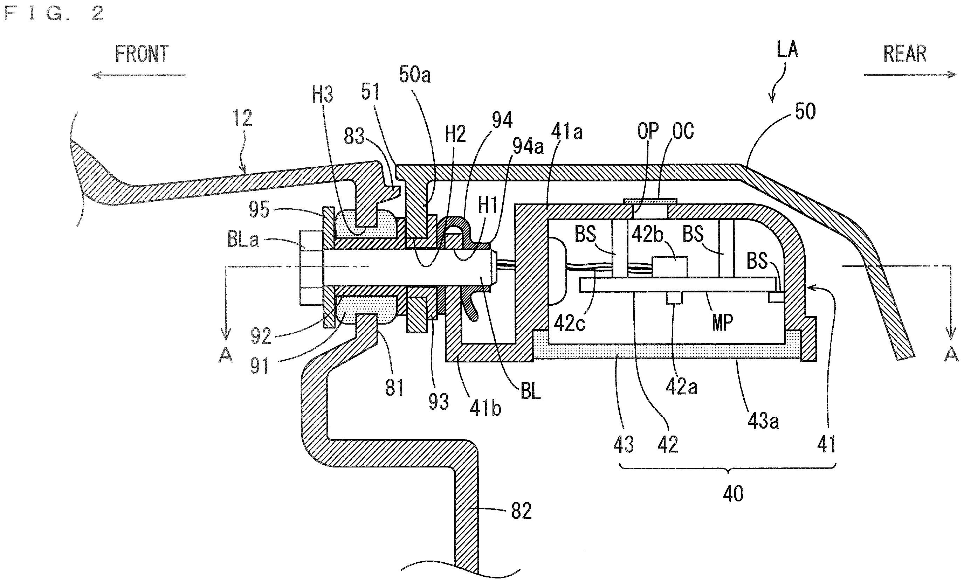

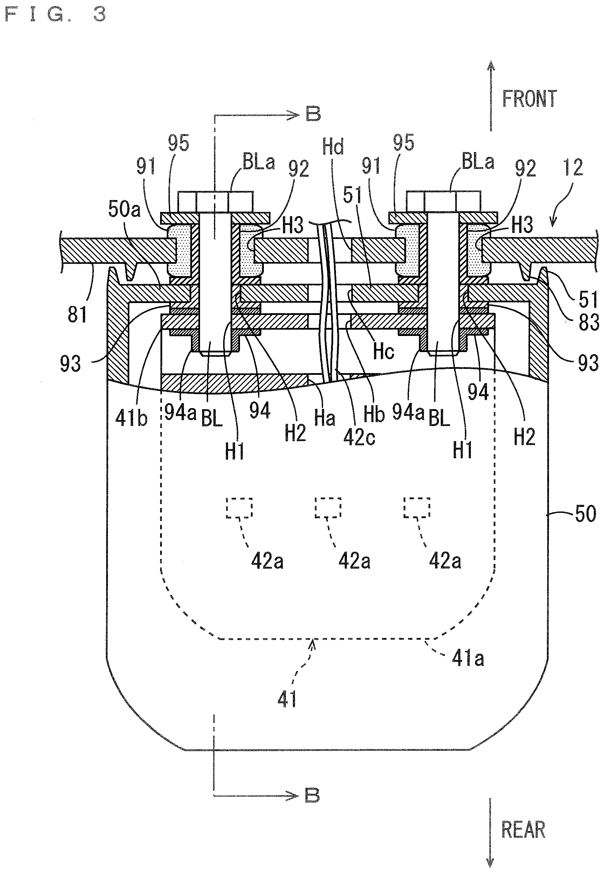

Fig. 2 is a longitudinal sectional view of the lamp assembly LA. Fig. 3 is a transverse sectional view of the lamp assembly LA. A cross sectional view taken along the line A-A of Fig. 2 is shown in Fig. 3, and a cross sectional view taken along the line B-B of Fig. 3 is shown in Fig. 2. The cross section of Fig. 3 is a partially cutaway cross sectional view of the lamp assembly LA. In Figs. 2 and 3, arrows indicating the front and the rear of the motorcycle 100 are shown.

As shown in Fig. 2, the lamp assembly LA includes a license lamp unit 40 and a cover 50. The license lamp unit 40 includes a casing 41, a circuit board 42 and a transmission portion 43. The casing 41 has a body 41 a and a mount portion 41 b. The body 41 a is provided to open in a downward direction and has a substantially rectangular upper surface and side surfaces that extend in the downward direction from each side of the upper surface.

The circuit board 42 is stored in the body 41a. The circuit board 42 has a mount surface MP, and the mount surface MP is directed in the downward direction in the body 41a. A plurality of light emitting devices 42a are mounted to the mount surface MP of the circuit board 42. Each light emitting device 42a is a light emitting diode (LED), for example. In the present example, the three light emitting devices 42a are provided to be arranged in a transverse direction (Fig. 3). The transmission portion 43 is mounted to the body 41 a to close the opening of the body 41a with the circuit board 42 being stored. The mount surface MP of the circuit board 42 faces the transmission portion 43. The transmission portion 43 has a light emitting surface 43a that emits light in the downward direction.

A connector 42b is mounted to the surface of the circuit board 42 on the opposite side of the mount surface MP. A plurality of wirings 42c are connected to the connector 42b. A hole Ha for drawing out the wirings 42c to the outside of the body 41a (see Fig. 3) is provided at the front end of the body 41 a. Electric power is supplied to the circuit board 42 through the plurality of wirings 42c of Fig. 2. Thus, the light emitting devices 42a emit light, and the number plate is irradiated with the light through the transmission portion 43. A mount position of the connector 42b is not limited to a particular position, and the connector 42b may be mounted to the mount surface MP.

A plurality of projections BS are provided on the inner surface of the body 41a. The plurality of projections BS are integrally formed with the body 41a. The circuit board 42 is horizontally positioned and fixed in the casing 41 by the plurality of projections BS.

An opening OP is formed at the upper surface of the body 41 a. A film-like opening cover OC is attached to the upper surface of the body 41 a to close the opening OP. The opening cover OC is made of a material having waterproofness and moisture permeability. A liquid-tight inner space in which the circuit board 42 is stored is formed by the body 41 a, the transmission portion 43 and the opening cover OC.

In this case, vapor in the body 41a is released to the outside of the body 41a through the opening cover OC while moisture such as rain water is prevented from entering the body 41a from the outside. Therefore, an occurrence of condensation in the body 41 a is prevented. Thus, an adherence of the liquid that has entered from the outside or the liquid generated due to the condensation to an electrical system such as the circuit board 42 and the light emitting devices 42a is prevented. Therefore, an occurrence of abnormality of the electrical system is prevented. Further, reduction in transmissivity of the transmission portion 43 due to an adherence of the liquid to the transmission portion 43 is prevented, so that weakening of the light emitted from the light emitting surface 43a is prevented.

In the present example, because the opening OP and the opening cover OC are provided at the upper surface of the body 41 a, vapor in the body 41 a is easily led to the outside through the opening cover OC. Further, as described below, the upper surface of the body 41 a is completely hidden by the cover 50. Therefore, the opening cover OC is not visible from the surroundings, and strange feeling in appearance due to the opening cover OC is not generated.

The mount portion 41 b is provided to extend in a forward direction for a constant length from a lower portion of the front end of the side surface of the body 41 a, and further extend in an upward direction in a plate shape. A pair of holes H1 (see Fig. 3) is formed at the mount portion 41 b to be arranged in the transverse direction. Further, one hole Hb (see Fig. 3) is formed between the pair of holes H1.

The cover 50 of Fig. 2 is provided to cover at least a part of the license lamp unit 40 except for the light emitting surface 43a. The wording "the cover 50 covers at least the part of the license lamp unit 40" means that the inner surface of the cover 50 faces the part of the license lamp unit 40, and the part of the license lamp unit 40 is covered by the cover 50 to be invisible from the surroundings. In the present example, the casing 41 is covered by the cover 50. In this case, because the license lamp unit 40 is not visible from the surroundings, only the design of the cover 50 needs to be changed when the design of the motorcycle 100 is changed, and it is not necessary to change the design of the license lamp unit 40. Therefore, flexibility of the license lamp unit 40 is enhanced.

Because the license lamp unit 40 is not visible from the surroundings, restriction on appearance of the license lamp unit 40 is reduced. Thus, flexibility in design of the license lamp unit 40 is enhanced. For example, when the objections BS are formed by integral molding at the body 41 a, sink marks sometimes occur at portions of the upper surface of the body 41 a on the opposite side of the objections BS. Sink marks mean a recess or a depression generated due to mold shrinkage.

Even when sink marks occur at the body 41 a, the sink marks are hidden by the cover 50, so that the presence of the sink marks is not recognized. Because the occurrence of sink marks is free from the problem, the casing 41 can be formed by the integral molding. Thus, it is not necessary to separately use a member for fixing the circuit board 42 in the casing 41. As a result, the size and the thickness of the license lamp unit 40 can be reduced.

Further, as described above, it is possible to provide the opening OP and the opening cover OC at the body 41 a without generating strange feeling in appearance.

In particular, the upper surface of the body 41a is completely hidden by the cover 50. Therefore, the objections BS are preferably provided on the upper surface of the body 41 a, and the opening OP and the opening cover OC are preferably provided at the upper surface of the body 41 a.

In the present example, the cover 50 is made of the same material as the mud guard 12. In this case, the texture of the cover 50 is equal or close to the texture of the mud guard 12. On the other hand, the license lamp unit 40 is hidden by the cover 50. Thus, even when the lamp assembly LA is mounted to the mud guard 12, strange feeling in appearance is not generated. Further, similar strength to the mud guard 12 can be ensured regarding the cover 50. A fiber-reinforced resin such as polypropylene containing fiber, for example, is used as the material for the mud guard 12 and the cover 50.

A plate-shaped mount portion 50a extending in an up-and-down direction is provided at the front end of the cover 50. A pair of holes H2 (see Fig. 3) is formed at the mount portion 50a to be arranged in the transverse direction. Further, one hole Hc (see Fig. 3) is formed between the pair of holes H2.

The license lamp unit 40 is arranged in the cover 50 such that the mount portion 41 b of the casing 41 overlaps with the mount portion 50a of the cover 50. A positioning portion may be provided at the inner surface of the cover 50 or the outer surface of the license lamp unit 40 in order to position the license lamp unit 40 in the cover 50. The positioning portion is made of a plurality of projections or protrusions, for example.

A lamp mount portion 81 and a plate mount portion 82 are provided at the mud guard 12. The lamp mount portion 81 is provided to be positioned at a position further upward than the plate mount portion 82 and extend in the up-and-down direction.

As described above, the license lamp unit 40 and the cover 50 are mounted to the mud guard 12 with the license lamp unit 40 being positioned with respect to the cover 50.

The mounting structure of the license lamp unit 40 and the cover 50 will be described. As shown in Fig. 3, a pair of holes H3 is formed at the lamp mount portion 81 to be arranged in the transverse direction. A grommet 91 is mounted to each hole H3. A cylindrical collar 92 is inserted into each grommet 91. A flange is provided at one end of each collar 92. The flange of the collar 92 is engaged with one end of the grommet 91. The collar 92 does not have to have the flange.

Further, a hole Hd is formed between the pair of holes H3. The wirings 42c are drawn out from the inside of the body 41 a through the holes Ha, Hb formed at the casing 41, the hole Hc formed at the cover 50 and the hole Hd formed at the lamp mount portion 81.

A cylindrical collar 93 is mounted to each hole H2 of the cover 50. A flange is provided at one end of the collar 93. The flange of each collar 93 is engaged between the mount portion 50a of the cover 50 and the mount portion 41 b of the casing 41. The collar 93 does not have to have the flange.

A pair of nuts 94 in a shape of a clip is mounted to the mount portion 41 b of the license lamp unit 40. Each nut 94 has a cylindrical portion 94a, and thread-cutting is performed on the inner peripheral surface of the cylindrical portion 94a. Each nut 94 is mounted such that a central axis of each cylindrical portion 94a overlaps with the center of the hole H1 of the mount portion 41 b.

Positioning of the license lamp unit 40 and the cover 50 is performed with respect to the lamp mount portion 81 such that the center of each hole H1 of the license lamp unit 40, each hole H2 of the cover 50 and each hole H3 of the lamp mount portion 81 overlap with one another.

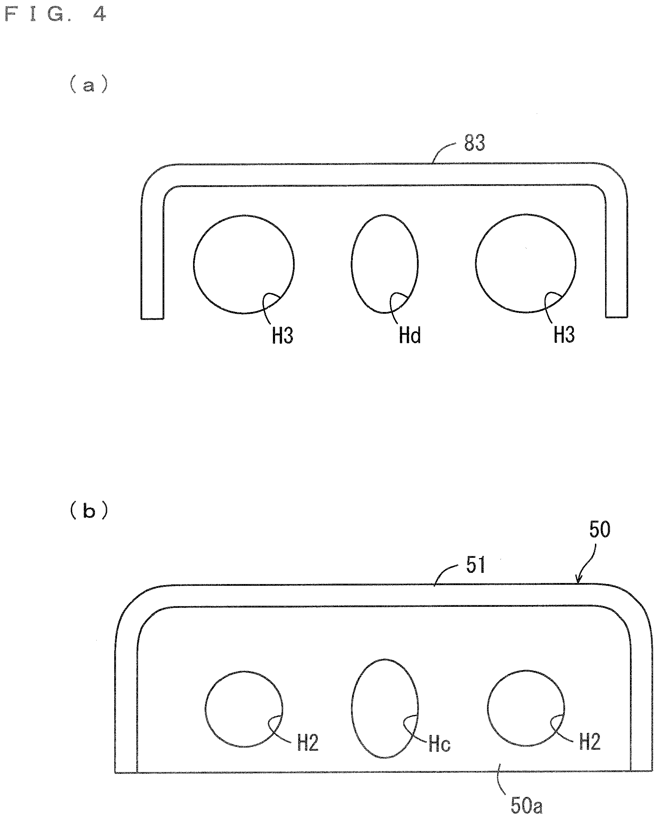

In the present example, a protrusion 83 is formed around the pair of the holes H3 and the hole Hd of the lamp mount portion 81, and a protrusion 51 is formed around the pair of holes H2 and the hole Hc of the cover 50 for positioning of the license lamp unit 40 and the cover 50. Figs. 4(a) and 4(b) are diagrams for explaining the protrusions 51, 83.

As shown in Fig. 4(a), the protrusion 83 extends in a reversed U shape to surround the pair of holes H3 and the hole Hd of the lamp mount portion 81. As shown in Fig. 4(b), the protrusion 51 extends in a reversed U shape to extend along the upper side and the lateral sides of the mount portion 50a of the cover 50. As shown in Figs. 2 and 3, the protrusion 83 is arranged inside the protrusion 51 with the center of each hole H3 of the lamp mount portion 81 and the center of each hole H2 of the cover 50 being coincided with each other. Thus, the positioning of the license lamp unit 40 and the cover 50 with respect to the lamp mount portion 81 can be easily performed.

A bolt BL is inserted into each hole H1 of the license lamp unit 40, each hole H2 of the cover 50 and each hole H3 of the lamp mount portion 81. In this case, a head portion BLa at one end of each bolt BL is arranged at a position further forward than the lamp mount portion 81. Further, a washer 95 is arranged between the head portion BLa of the bolt BL and the grommet 91. The other end of the bolt BL is screwed into the cylinder portion 94a of each nut 94. Thus, the license lamp unit 40 and the cover 50 are fixed to the lamp mount portion 81.

### (3) Effects

In the present embodiment, the license lamp unit 40 and the cover 50 are mounted to the lamp mount portion 81 of the mud guard 12 by the common bolts BL and the common nuts 94. Because the common mount members are used for the mounting of the license lamp unit 40 and the cover 50, it is not necessary to ensure a mount position to the mud guard 12 at the cover 50 separately from a mount position of the license lamp unit 40. Further, it is not necessary to ensure a mount position of the cover 50 at the mud guard 12 separately from the mount position of the license lamp unit 40. Thus, the size of the cover 50 and the mud guard 12 can be reduced. Further, the number of components can be reduced.

Further, in the present embodiment, because the license lamp unit 40 and the cover 50 are mounted to the mud guard 12 by the pair of bolts BL and the pair of nuts 94, the license lamp unit 40 and the cover 50 are prevented from being rotated in a circumferential direction of each bolt BL, and the license lamp unit 40 and the cover 50 are firmly fixed to the mud guard 12.

### (4) Other Embodiments

### (4-1)

While the pair of bolts BL and the pair of nuts 94 are used as the common mount members in the above-mentioned embodiment, the present invention is not limited to this.

For example, the license lamp unit 40 and the cover 50 may be mounted to the mud guard 12 by one bolt BL and one nut 94. In this case, the number of components can be more sufficiently reduced. Further, the license lamp unit 40 and the cover 50 may be mounted to the mud guard 12 by the three or more bolts BL and the three or more nuts 94. In this case, the license lamp unit 40 and the cover 50 are more firmly fixed to the mud guard 12.

Further, the mount members are not limited to the bolts BL and the nuts 94, but another mount member such as a wire may be used.

### (4-2)

While the opening OP and the opening cover OC are provided at the upper surface of the body 41 a in order to prevent condensation in the body 41 a in the above-mentioned embodiment, the present invention is not limited to this. Condensation in the body 41 a may be prevented by another configuration without the opening OP and the opening cover OC.

Further, when the opening OP and the opening cover OC are not visible from the surroundings, or when it is free from the problem even in a case in which the opening OP and the opening cover OC are visible from the surroundings, the opening OP and the opening cover OC may be provided at the side surface of the body 41 a.

### (4-3)

While the above-mentioned embodiment is an example in which the present invention is applied to the motorcycle, the invention is not limited to this. The present invention may be applied to another saddle-straddling type motor vehicle such as a motor tricycle, an ATV (All Terrain Vehicle) or the like.

### (5) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a saddle-straddling type motor vehicle, the body frame 1X is an example of a body frame, the mud guard 12 is an example of a mud receiving member, the license lamp unit 40 is an example of a license lamp unit, the cover 50 is an example of a cover, the casing 41 is an example of a casing, the transmission portion 43 is an example of a transmission portion, the circuit board 42 is an example of a circuit board, the light emitting device 42a is an example of a light emitting device, the projection BS is an example of a projection and the bolt BL and the nut 94 are examples of a mount member.

Further, the hole H3 is an example of a first hole, the hole H1 is an example of a second hole, the hole H2 is an example of a third hole, the bolt BL is an example of a bolt, the nut 94 is an example of a nut and the opening cover OC is an example of a part of a casing made of a moisture-permeable water-proof material.

As each of constituent elements recited in the claims, various other elements having configurations or functions described in the claims can be also used.

### INDUSTRIAL APPLICABILITY

The present invention can be effectively utilized for various saddle-straddling type motor vehicles.

## Claims

1. A saddle-straddling type motor vehicle comprising:
a body frame (1X);
a mud receiving member (12) mounted to a rear portion of the body frame (1X);
a license lamp unit (40) mounted to the mud receiving member (12) and having a light emitting surface (43a) that emits light; and
a cover (50) mounted to the mud receiving member (12) to cover at least a part of the license lamp unit (40) except for the light emitting surface (43a), wherein the license lamp unit (40) and the cover (50) are mounted to the mud receiving member (12) by a common mount member (BL, 94), and wherein the license lamp unit (40) includes
a casing (41) configured to open in a downward direction,
a transmission portion (43) configured to close an opening of the casing (41) and to transmit light, transmission portion (43) having the light emitting surface (43a),
**characterized in that** the license lamp unit (40) further includes a circuit board (42) arranged in the casing (41) and having a mount surface (MP) facing the transmission portion (43),
light emitting devices (42a) mounted to the mount surface (MP) of the circuit board (42), and
projections (BS) that are integrally formed with the casing (41) and for fixing the circuit board (42) in the casing (41),
a liquid-tight storage space in which the circuit board (42) is stored is formed by the casing (41) and the transmission portion (43).

2. The saddle-straddling type motor vehicle according to claim 1, wherein
a first hole (H3) is provided at the mud receiving member (12), a second hole (H1) is provided at the casing (41) of the license lamp unit (40) and a third hole (H2) is provided at the cover (50),
the common mount member (BL, 94) includes a bolt (BL) and a nut (94), and
the license lamp unit (40) and the cover (50) are positioned with respect to the mud receiving member (12) such that the first, second and third holes (H1, H2, H3) overlap with one another, and the license lamp unit (40) and the cover (50) are fixed to the mud receiving member (12) by the bolt (BL) and the nut (94) with the bolt (BL) being inserted into the first, second and third holes (H1, H2, H3).

3. The saddle-straddling type motor vehicle according to claim 1 or 2, wherein
the cover (50) is made of a same material as the mud receiving member (12).

4. The saddle-straddling type motor vehicle according to any one of claims 1 to 3, wherein
a part of the casing (41) is made of a moisture-permeable water-proof material.

## Patentansprüche

1. Ein Kraftfahrzeug vom Sattel-Grätschsitztyp, das folgende Merkmale aufweist:
einen Karosserierahmen (1X);
ein Schmutzaufnahmebauglied (12), das an einem hinteren Abschnitt des Karosserierahmens (1X) befestigt ist;
eine Nummernschildbeleuchtungseinheit (40), die an dem Schmutzaufnahmebauglied (12) befestigt ist und eine Licht emittierende Oberfläche (43a) aufweist, die Licht emittiert; und
eine Abdeckung (50), die an dem Schmutzaufnahmebauglied (12) befestigt ist, um zumindest einen Teil der Nummernschildbeleuchtungseinheit (40), mit Ausnahme der Licht emittierenden Oberfläche (43a), abzudecken, wobei
die Nummernschildbeleuchtungseinheit (40) und die Abdeckung (50) durch ein gemeinsames Befestigungsbauglied (BL, 94) an dem Schmutzaufnahmebauglied (12) befestigt sind und wobei
die Nummernschildbeleuchtungseinheit (40) Folgendes umfasst:
ein Gehäuse (41), das ausgebildet ist, sich in eine Abwärtsrichtung zu öffnen,
einen Durchlassabschnitt (43), der ausgebildet ist, eine Öffnung des Gehäuses (41) zu schließen und Licht durchzulassen, wobei der Durchlassabschnitt (43) die Licht emittierende Oberfläche (43a) aufweist,
**dadurch gekennzeichnet, dass** die Nummernschildbeleuchtungseinheit (40) ferner Folgendes umfasst:
eine Schaltungsplatine (42), die in dem Gehäuse (41) angeordnet ist und eine Befestigungsoberfläche (MP) aufweist, die dem Durchlassabschnitt (43) zugewandt ist,
Licht emittierende Bauelemente (42a), die an der Befestigungsoberfläche (MP) der Schaltungsplatine (42) befestigt sind, und
Vorsprünge (BS), die mit dem Gehäuse (41) einstückig gebildet sind und zum Anbringen der Schaltungsplatine (42) in dem Gehäuse (41) dienen,
ein flüssigkeitsdichter Lagerraum, in dem die Schaltungsplatine (42) gelagert ist, durch das Gehäuse (41) und den Durchlassabschnitt (43) gebildet ist.

2. Das Kraftfahrzeug vom Sattel-Grätschsitztyp gemäß Anspruch 1, bei dem
ein erstes Loch (H3) an dem Schmutzaufnahmebauglied (12) vorgesehen ist, ein zweites Loch (H1) an dem Gehäuse (41) der Nummernschildbeleuchtungseinheit (40) vorgesehen ist und ein drittes Loch (H2) an der Abdeckung (50) vorgesehen ist,
das gemeinsame Befestigungsbauglied (BL, 94) eine Schraube (BL) und eine Mutter (94) umfasst und
die Nummernschildbeleuchtungseinheit (40) und die Abdeckung (50) bezüglich des Schmutzaufnahmebauglieds (12) derart positioniert sind, dass das erste, das zweite und das dritte Loch (H1, H2, H3) einander überlappen und die Nummernschildbeleuchtungseinheit (40) und die Abdeckung (50) durch die Schraube (BL) und die Mutter (94) an dem Schmutzaufnahmebauglied (12) angebracht werden, indem die Schraube (BL) in das erste, das zweite und das dritte Loch (H1, H2, H3) eingeführt wird.

3. Das Kraftfahrzeug vom Sattel-Grätschsitztyp gemäß Anspruch 1 oder 2, bei dem
die Abdeckung (50) aus einem selben Material wie das Schmutzaufnahmebauglied (12) hergestellt ist.

4. Das Kraftfahrzeug vom Sattel-Grätschsitztyp gemäß einem der Ansprüche 1 bis 3, bei dem
ein Teil des Gehäuses (41) aus einem feuchtedurchlässigen wasserfesten Material hergestellt ist.

## Revendications

1. Véhicule à moteur de type à selle à enfourcher, comprenant:
un châssis de carrosserie (1X);
un élément recevant la boue (12) monté sur une partie arrière du châssis de carrosserie (1X);
une unité d'éclairage de la plaque d'immatriculation (40) montée sur l'élément recevant la boue (12) et présentant une surface d'émission de lumière (43a) qui émet de la lumière; et
un couvercle (50) monté sur l'élément recevant la boue (12), destiné à recouvrir au moins une partie de l'unité d'éclairage de la plaque d'immatriculation (40), sauf la surface d'émission de lumière (43a), où l'unité d'éclairage de la plaque d'immatriculation (40) et le couvercle (50) sont montés sur l'élément recevant la boue (12) par un élément de montage commun (BL, 94) et où l'unité d'éclairage de la plaque d'immatriculation (40) comprend
un boîtier (41) configuré de manière à s'ouvrir dans une direction vers le bas,
une partie de transmission (43) configurée pour fermer une ouverture du boîtier (41) et pour transmettre de la lumière, la partie de transmission (43) présentant la surface d'émission de lumière (43a),
**caractérisé par le fait que** l'unité d'éclairage de la plaque d'immatriculation (40) comporte par ailleurs
une plaque de circuit (42) disposée dans le boîtier (41) et présentant une surface de montage (MP) faisant face à la partie de transmission (43),
des dispositifs d'émission de lumière (42a) montés sur la surface de montage (MP) de la plaque de circuit (42), et
des saillies (BS) qui sont formées de manière solidaire avec le boîtier (41) et destinées à fixer la carte de circuit (42) dans le boîtier (41),
un espace d'entreposage étanche aux liquides, dans lequel est entreposée la carte de circuit (42), est formé par le boîtier (41) et la partie de transmission (43).

2. Véhicule à moteur de type à selle à enfourcher selon la revendication 1, dans lequel
un premier trou (H3) est prévu dans l'élément recevant la boue (12), un deuxième trou (H1) est prévu dans le boîtier (41) de l'unité d'éclairage de la plaque d'immatriculation (40) et un troisième trou (H2) est prévu dans le couvercle (50),
l'élément de montage commun (BL, 94) comporte un boulon (BL) et un écrou (94), et
l'unité d'éclairage de la plaque d'immatriculation (40) et le couvercle (50) sont positionnés par rapport à l'élément recevant la boue (12) de sorte que les premier, deuxième et troisième trous (H1, H2, H3) se recouvrent entre eux, et l'unité d'éclairage de la plaque d'immatriculation (40) et le couvercle (50) sont fixés à l'élément recevant la boue (12) par le boulon (BL) et l'écrou (94), le boulon (BL) étant introduit dans les premier, deuxième et troisième trous (H1, H2, H3).

3. Véhicule à moteur de type à selle à enfourcher selon la revendication 1 ou 2, dans lequel
le couvercle (50) est réalisé dans un même matériau que l'élément recevant la boue (12).

4. Véhicule à moteur de type à selle à enfourcher selon l'une quelconque des revendications 1 à 3, dans lequel
une partie du boîtier (41) est réalisée dans un matériau imperméable à l'eau perméable à l'humidité.
